# EUROPEAN PATENT APPLICATION

(11) **EP 4 832 014 A2**
(43) Date of publication of application: **28.10.2026**
(21) Application number: 26197751.6
(22) Date of filing: 07.12.2021
(51) Int. Cl.: G21C 3/32

(54) **HIGH ENERGY NUCLEAR FUEL, FUEL ASSEMBLY, AND REFUELING METHOD**

(30) Priority: 07.12.2020 US 202063122100 P
(62) Document number(s) of the earlier application(s) in accordance with Art. 76 EPC: 21854726.3 / 4 256 586
(71) Applicant: Westinghouse Electric Company LLC, Cranberry Township, PA 16066 (US)
(72) Inventor: STUCKER, David L., Chapin, 29036 (US); LAM, Ho Q., Verona, 15147 (US)
(74) Representative: Fleuchaus & Gallo Partnerschaft mbB

(57) **Abstract**

Provided herein is a nuclear fuel assembly for a pressurized water reactor. The nuclear fuel assembly comprises: a plurality of nuclear fuel rods configured to contain a fissile material, wherein the nuclear fuel assembly is configured such that a hydrogen to uranium ratio for the fuel assembly, when coolant and the fissile material are present under operating conditions, is at least 4.0. Also provided herein is a method for refueling a pressurized water nuclear reactor comprising a nuclear fuel assembly of the present disclosure.

## Description

### CROSS-REFERENCE TO RELATED APPLICATION

This application claims priority to U.S. Provisional Application No. 63/122,100, filed December 7, 2020 entitled "High Energy Nuclear Fuel, Fuel Assembly, and Refueling Method".

### BACKGROUND

In nuclear reactors, the free neutrons produced by fission of the fissile material (*e.g.*, nuclear fuel comprising ²³⁵U and/or ²³⁹P) contribute to the generation of energy by sustaining a fission chain reaction of the fissile material. This chain reaction produces heat which can be used for energy generation in, for example, a nuclear power plant. However, over time, the fissile material inventory undergoes fission and is depleted, requiring refueling and/or other maintenance to maintain safe and effective power generation. Refueling and/or other maintenance operations can contribute to the cost of generating electricity via nuclear power plants. A need exists to minimize materials and time needed to complete these operations and/or to minimize the frequency with which these operations are required.

US Patent Application Publication No. 2012/033776 A1 discloses a nuclear reactor comprising a fuel rod enclosing a nuclear fuel and a control rod. Neutron absorber concentration in a primary coolant at full power operation, when operation of the nuclear reactor is started, is equal to or lower than a value obtained by adding a predetermined value to a value obtained by subtracting a concentration of the neutron absorber required for maintaining a cold shutdown state of the nuclear reactor when an operation of the nuclear reactor is started from the concentration of the neutron absorber required to maintaining cold shutdown of the nuclear reactor. US Patent Application Publication No. 2010/054389 A1 discloses a pressurized water nuclear reactor fuel assembly burning mixed oxide fuel with a fully annular fuel pellet stack in the fuel rods and radial enrichment zoning within the assembly. The intra-assembly rod power distribution is relatively smooth regardless of the characteristics of the adjacent assemblies.

### SUMMARY

Provided herein is a nuclear fuel assembly for a pressurized water reactor. The nuclear fuel assembly comprises a plurality of nuclear fuel rods configured to contain a fissile material, wherein the nuclear fuel assembly is configured such that a hydrogen to uranium ratio for the fuel assembly, when coolant and the fissile material are present under operating conditions, is greater than 4.0.

Also provided herein is a method for refueling a pressurized water nuclear reactor comprising a nuclear fuel assembly of the present disclosure. The method comprises refueling the pressurized water nuclear reactor on 24-month periodic cycle intervals, for example.

The nuclear fuel assembly as disclosed herein can optimize the technical and economic aspects of the fission chain reaction of the fuel assembly to be used in high energy, high discharge burnup applications such as 24-month fuel cycles. The optimization can allow for more energy to be extracted from a given mass of fissile material while maintaining compliance with the technical and licensing requirements for plant operation. Additionally, effects of the fuel assembly configuration on neutron moderation, temperature, and safety protocols have been considered in order to provide the various fuel assembly configuration options of the present disclosure which improve the safety and efficiency of nuclear reactor systems. Additional benefits are also disclosed herein.

It is understood that the inventions described in the present disclosure are not limited to the examples summarized in this Summary. Various other examples are described and exemplified herein.

### BRIEF DESCRIPTION OF THE DRAWINGS

Various features of the embodiments described herein are set forth with particularity in the appended claims. The various embodiments, however, both as to organization and methods of operation, together with advantages thereof, may be understood in accordance with the following description taken in conjunction with the accompanying drawings as follows:
FIG. 1 is a cross-sectional view of a nuclear fuel pellet according to the present disclosure.
FIG. 2 is a cross-sectional view of a nuclear fuel rod according to the present disclosure.
FIG. 3 is a cross-sectional view of two nuclear fuel rods according to the present disclosure.

Corresponding reference characters indicate corresponding parts throughout the several views. The exemplifications set out herein illustrate various embodiments of the invention, in one form, and such exemplifications are not to be construed as limiting the scope of the invention in any manner.

### DESCRIPTION

Before explaining various aspects of the present disclosure in detail, it should be noted that the illustrative examples are not limited in application or use to the details of construction and arrangement of parts illustrated in the accompanying drawings and description. The illustrative examples may be implemented or incorporated in other aspects, variations, and modifications, and may be practiced or carried out in various ways. Further, unless otherwise indicated, the terms and expressions employed herein have been chosen for the purpose of describing the illustrative examples for the convenience of the reader and are not for the purpose of limitation thereof. Also, it will be appreciated that one or more of the following-described aspects, expressions of aspects, and/or examples, can be combined with any one or more of the other following-described aspects, expressions of aspects, and/or examples.

Nuclear reactors produce neutron radiation in order to cause and maintain the fission chain reaction responsible for their energy generation. In many nuclear reactors, neutrons produced by the chain reaction are moderated (e.g., slowed) to, for example, increase their likelihood of contributing to the chain reaction. These reactors include pressurized water reactors and related systems (PWR), which cool the fuel by removing the heat from the fission chain reaction and transferring this heat to the pressurized water in the reactor region called primary water indicating that this water will contain radioactive contamination due to the contact with and potential leakage from the fuel rods. The primary water serves as both coolant and neutron moderator. The primary water, in turn, transfers its heat to clean secondary water at a lower pressure than the primary water. The reduced pressure in the secondary water and high temperature of the primary water causes the secondary water introduced into the steam generator to boil and form steam which is used, for example, to drive steam turbines which are coupled to large electrical generators to produce electrical power. Thus, the PWR uses the fission of fissile material in nuclear fuel as a source of electrical energy.

Disclosed herein are various configurations for a PWR nuclear fuel assembly that allow for increased and more efficient extraction of energy (e.g., heat) from nuclear fuel, which can enable increased time between refueling cycles and reduced operation costs coming from the reduction of uranium costs, outage cost, staffing, spent fuel disposal and/or other aspects of plant operation. The configurations of the present disclosure use, for example, newly developed nuclear fuel, fuel rods, and other components to create a nuclear fuel assembly capable of increased energy extraction. Accordingly, provided herein is a nuclear fuel assembly, a method for refueling a pressurized water nuclear reactor, nuclear fuel rods, and nuclear fuel pellets. Nuclear fuel of the present disclosure may be referred to herein as "high energy nuclear fuel (HEF)," "high burnup fuel," "high enrichment fuel," and the like.

PWR use fuel assemblies, which can comprise nuclear fuel rods, and other associated components that can, *inter alia,* hold the fuel rods and guide thimbles (e.g., tubes containing control rods or instrumentation) in position during reactor operation and ensure adequate exposure to reactor coolant. A nuclear fuel assembly of the present disclosure can comprise a plurality of nuclear fuel rods configured to contain a nuclear fuel. The nuclear fuel assembly can comprise 18×18, 17×17, 16×16, 15×15, 14×14 and other configurations whether in square or triangular lattice, and various active core heights. A 17×17 configuration can comprise a total of 289 components each of which may be either a fuel rod or a guide thimble. In one example, the 17×17 configuration can comprise 264 fuel rods and 25 guide thimbles.

The nuclear fuel assembly can be designed to optimize the fuel utilization to a specified objective. One optimization parameter for a fuel assembly for use in a PWR is the hydrogen to uranium (H/U) ratio. The hydrogen to uranium ratio is equal to the number of hydrogen atoms divided by the number of uranium atoms of all isotopes at operating conditions within the reactor volume. The hydrogen atoms can be, for example, components of water molecules present in, or sourced from, the coolant/moderator of the PWR and the uranium atoms can be present in, or sourced from, the nuclear fuel. For example, the H/U ratio can be calculated according to Equation 1 below: $\begin{matrix}\frac{H}{U} Ratio = \\ \frac{\left(Total Volume for Coolant in Active Fuel Assembly\right) ∗ \left(#of H Atoms per Unit Volume in Coolant\right)}{\left(Total Volume of Nuclear Fuel in Active Fuel Assembly\right) ∗ \left(#of U Atoms per Unit Volume in Nuclear Fuel\right)}\end{matrix}$ Equation 1

Low values of H/U can result in a higher average energy in the thermal neutron energy spectrum which minimizes fissile and control worth and favors plutonium formation at the expense of initial enriched uranium requirements. High values of H/U can result in a thermal neutron energy spectrum with lower average energy which increases fissile and control material worth and favors burning plutonium which reduces the initial enriched uranium requirements.

It is noted that an optimal value of H/U ratio is dependent on the fuel cycle requirements. For example, high burnup, high enrichment, and long fuel cycles have the effect of increasing the neutron absorption which, in turn, requires an increased moderator to optimize the efficiency of reactor operation when compared to the current paradigm of plant operation. Additionally, when the fuel cycle does not credit any value for separated plutonium (no reprocessing) the optimal H/U ratio is also increased so that the fuel effectively burns plutonium that is bred as part of normal operation, as opposed to preferentially breeding plutonium for subsequent extraction and recycle. The H/U ratio can be updated in a new fuel bundle when the application of that new fuel bundle has changed significantly. Such changes can be present in fuel and fuel assemblies of the present disclosure. An example of a High Energy Fuel and Fuel Cycle (according to the present disclosure), compared to another example of fuel and fuel cycles is below:

| | **Comparative Fuel Design** | **Fuel design of the present disclosure** |
|---|---|---|
| Cycle Length | 12-months | 24-months |
| Cycle Energy | 270 EFPD | 700 EFPD |
| Reload Burnable Absorbers | None | Heavy Boron and/or Gadolinia |
| Loading Pattern | Out-in-in high leakage | In-in-out low leakage |
| Power peaking | Low | High |
| Batch Avg. Discharge Burnup | 33 GWd/tU | 70 GWd/tU |
| Maximum Fuel Enrichment | < 5.0 w/o ²³⁵U | <20 w/o ²³⁵U |
| Reprocessing & Recycling | Base Assumption | None |
| H/U Ratio | 3.8 - 4.0 | Target 4.3, Range 4.0 - 5.0 |

The H/U of the nuclear fuel assembly can be, for example, at least 4.1, at least 4.2, at least 4.3, at least 4.4, at least 4.5, at least 4.6, at least 4.7, at least 4.8, at least 4.9, or at least 5.0. The H/U of the nuclear fuel assembly can be, for example, 5.0 or less, 4.9 or less, 4.8 or less, 4.7 or less, 4.6 or less, 4.5 or less, 4.4 or less, 4.3 or less, 4.2 or less, or 4.1 or less. The H/U ratio can be in a range of 4.0 to 5.0 such as, for example, 4.0 to 4.5, 4.1 to 5.0, 4.2 to 5.0, 4.3 to 5.0, or 4.4 to 5.0. The H/U ratio can be in a range of, for example, 4.1 to 4.5, 4.1 to 4.4, 4.1 to 4.3, or 4.1 to 4.2. The H/U ratio can be, for example, 4.1, 4.2, 4.3, 4.4, or 4.5.

The H/U ratio can determine, at least in part, how much energy can be harvested from nuclear fuel before maintenance and/or refueling are required. The harvested energy ("burnup") can be measured in gigawatt days per metric tonne of enriched uranium (GWd/tU). For example, a higher H/U ratio can mean that more of the neutrons produced by fission will be moderated to a degree appropriate for capture by a uranium nucleus. Various configurations of nuclear fuel assemblies are described herein which can increase fuel burnup and/or increase the H/U ratio of a PWR.

The nuclear fuel, when contained within the fuel rods, can comprise any fissile material that is chemically compatible with the nuclear fuel rods of the nuclear fuel assembly and the coolant of the reactor. For example, the nuclear fuel can comprise a uranium-containing ceramic fissile material. The uranium-containing ceramic fissile material can comprise, for example, uranium silicides (e.g., U₃Si₂, U₃Si₅, U₃Si); uranium nitrides (e.g., UN, U¹⁵N); uranium carbides (e.g., UC); uranium borides (e.g., UBₓ, UB₂, UB₄), where X is an integer (metal borides (e.g., uranium borides) may have a wide variety of metal:boron ratios); uranium phosphides (e.g., UP); uranium sulfides (e.g., US₂); uranium oxides (e.g., UO₂, UCO, U₃O₈, UO₃); or mixtures of any of these. Nuclear fuel may also comprise mixtures of fissile or fertile elements such as mixtures of uranium and plutonium, uranium and thorium, as well as mixtures of uranium, plutonium, and/or thorium with other actinide series elements such as neptunium, americium, curium, and others.

The nuclear fuel can comprise any enrichment of ²³⁵U as required by the core design requirements. For example, up to 5% by weight ²³⁵U, based on the total weight of the uranium in the fissile material can be employed. Core design requirements can be met using fuel that is entirely < 5.0 w/o ²³⁵U. However, fuel can be designed for 24-month fuel cycles and high discharge burnup, with enrichments up to 10 w/o ²³⁵U or up to 20 w/o ²³⁵U when used in combination with highly absorbing components within the fuel assembly and/or when fuel cycle length and/or fuel discharge burnup are increased as disclosed herein.

For example, the nuclear fuel can comprise at least 5% by weight ²³⁵U and no greater than 20% by weight ²³⁵U, based on the total weight of the uranium in the fissile material. The nuclear fuel can comprise at least 6% by weight ²³⁵U, at least 7% by weight ²³⁵U, at least 8% by weight ²³⁵U, at least 9% by weight ²³⁵U, at least 10% by weight ²³⁵U, at least 11% by weight ²³⁵U, at least 12% by weight ²³⁵U, at least 13% by weight ²³⁵U, at least 14% by weight ²³⁵U, at least 15% by weight ²³⁵U, at least 16% by weight ²³⁵U, at least 17% by weight ²³⁵U, at least 18% by weight ²³⁵U, or at least 19% by weight ²³⁵U, all based on the total weight of the uranium in the fissile material. The nuclear fuel can comprise 19% or less by weight ²³⁵U, 18% or less by weight ²³⁵U, 17% or less by weight ²³⁵U, 16% or less by weight ²³⁵U, 15% or less by weight ²³⁵U, 14% or less by weight ²³⁵U, 13% or less by weight ²³⁵U, 12% or less by weight ²³⁵U, 11% or less by weight ²³⁵U, 10% or less by weight ²³⁵U, 9% or less by weight ²³⁵U, 8% or less by weight ²³⁵U, 7% or less by weight ²³⁵U, or 6% or less by weight ²³⁵U, all based on the total weight of the uranium in the fissile material. For example, the nuclear fuel can comprise at least 5% by weight ²³⁵U and no greater than 15% by weight ²³⁵U, at least 5% by weight ²³⁵U and no greater than 10% by weight ²³⁵U, at least 6% by weight ²³⁵U and no greater than 20% by weight ²³⁵U, at least 6% by weight ²³⁵U and no greater than 15% by weight ²³⁵U, at least 6% by weight ²³⁵U and no greater than 10% by weight ²³⁵U, or any other subrange, all based on the total weight of the uranium in the fissile material.

The nuclear fuel can be present in the fuel rods as nuclear fuel pellets. The nuclear fuel pellets can comprise the fissile material. At least a portion of the nuclear fuel pellets can be annular nuclear fuel pellets. These annular fuel pellets serve to reduce fuel temperature and to provide void volume within the fuel rod. The reduced fuel temperature and increased void volume when taken together or separately can have the effect of reducing the gas pressure within the fuel rod which is a key limiting parameter when dealing with high burnup fuel since a significant fraction of the fission products released as a result of fission exist in a gas phase at operating temperatures or are volatile and form gases at operating temperature. In addition, burnable absorbers containing boron can be used within the fuel rod which can emit helium gas as a result of absorptions in boron. The ability to increase void volume to accommodate helium release from burnable absorber usage can assist with attaining high burnup at acceptable fuel rod internal pressure. Use of annular fuel pellets for the entire fuel stack can enable the core design to tailor the uranium loading and the H/U ratio of a fuel assembly, or fuel region, without changing the hydraulic characteristics of the fuel assembly. This ability can be beneficial since it has leverage on fuel utilization efficiency, but does not result in changing the fuel hydraulic characteristics. Changing the fuel hydraulic characteristics can require significant cost and time.

It is expected that a vast majority, (e.g., at least 65%, at least 75%, at least 85%) of fuel rods within a fuel assembly can use annular fuel pellets. All of the nuclear fuel pellets can be annular nuclear fuel pellets, or none of the nuclear fuel pellets can be annular nuclear fuel pellets. Nuclear fuel pellets of the present disclosure can comprise a range of void volume from 2.5 percent to 15 percent. As an example, a fuel pellet may have a void fraction of 2.5%, which, for 17×17 fuel purposes, corresponds to a pellet inner diameter of approximately 0.050 inches (1.25 mm). An another example, a fuel pellet may have a void fraction of 15% which, for 17×17 fuel, corresponds to a pellet inner diameter of approximately 0.125 inches (3.15 mm).

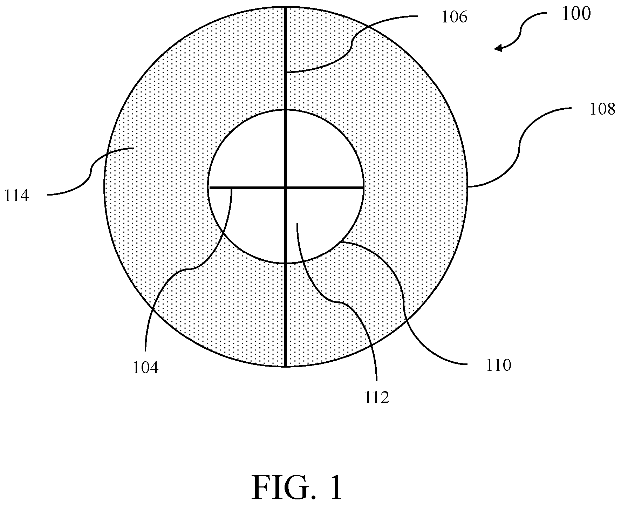

Referring to FIG. 1, a cross-section of an annular nuclear fuel pellet 100 of the present disclosure is shown. The pellet 100 can comprise an outer surface 108 and an inner surface 110. The inner surface 110 can at least partially bound a cavity 112. The pellet 100 can comprise fissile material 114 surrounding the cavity 112. The fissile material 114 can be disposed between the inner surface 110 and the outer surface 108.

The pellet 100 can comprise an outer diameter (see line 106) extending from a point of the outer surface 108, through a center of the cavity 112, and to an opposite point on the outer surface 108. The pellet 100 can comprise an inner diameter (see line 104) extending from a point of the inner surface 110, through a center of the cavity 112, and to an opposite point on the inner surface 110. Nuclear fuel pellets of the present disclosure can optionally comprise an annular shape where up to 15% of the pellet's 100 total volume is void space 112. The total volume can comprise the volume of the fissile material 114 and the cavity 112. The pellet can have a total volume with up to 8%, 9%, or 10% void space 112 based on the total volume of the pellet 100. Alternatively or additionally, the pellet can have a total volume with at least 4%, 5%, or 6% void space 112 based on the total volume of the pellet 100.

Nuclear fuel pellets of the present disclosure can optionally comprise an annular shape having an inner diameter 104 in a range of 0.065 inches to 0.075 inches (approximately 1.65 mm to 1.91 mm) such as, for example, an inner diameter 104 in a range of 0.070 inches (approximately 1.78 mm). The exemplary fuel pellet 100 shown in FIG. 1 would not necessarily comprise any specific physical features at lines 104, 106. These lines merely indicate the geometry of the inner and outer diameters. FIG. 1 is an example of the present disclosure and other shapes comprising a central cavity could be used for fuel pellets of the present disclosure.

HEF nuclear fuel rods of the present disclosure can comprise at least two forms-a first form with solid pellets in the enriched zone and a second form with annular pellets in the enriched zone. The HEF fuel rods typically have five or more axial zones with at least two distinct enrichments. Axial blanket zones are of a reduced enrichment to minimize neutron leakage from the top and bottom of the reactor. In certain instances, the axial blanket enrichment can be about 50% of the enriched zone, with the same enrichment for top and bottom axial blankets. In other instances, however, the top and bottom axial blankets may comprise different enrichments.

The axial blankets typically utilize annular fuel pellets in which the internal void is approximately 25% of the solid pellet volume. The design option exists to utilize either solid or annular axial blankets in the nuclear fuel rod. The enriched zone of the fuel can be solid or can utilize annular fuel pellets in which the internal void is approximately 4 - 10% of the solid pellet volume. The enriched zone fuel pellets contain enrichment ranging from natural uranium at 0.711 w/o ²³⁵U upwards to 10 w/o ²³⁵U or higher depending on the core design and fuel management requirements for the specific reactor. The enriched zone resides within the HEF fuel rods above the lower axial blanket and below the top axial blanket. Superimposed on the HEF enriched zone can be the burnable absorber (BA) zone which is usually shorter than the enriched zone and usually symmetric about the core center. However, specific core design requirements can change the BA length and centering. In at least one example, there are five axial zones within the HEF fuel rod consisting of the lower axial blanket, an enriched no BA or cutback zone, the enriched zone with BA, another enriched cutback zone, and finally the top axial blanket.

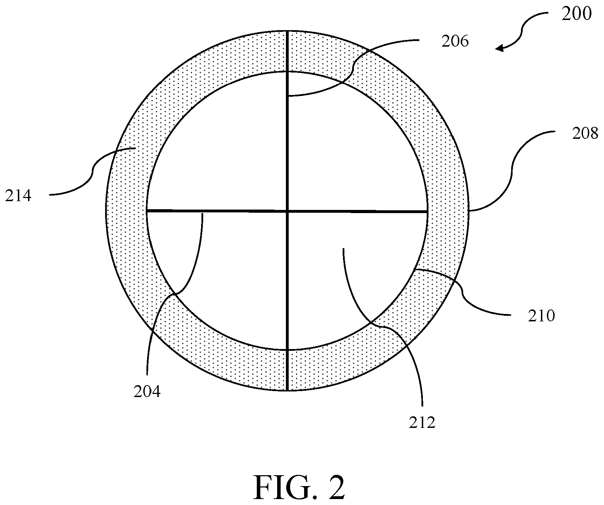

Referring to FIG. 2, a cross sectional view of a nuclear fuel rod 200 of the present disclosure is shown. The nuclear fuel rod 200 can comprise an outer surface 208 and an inner surface 210. The inner surface 210 can at least partially bound a cavity 212. The nuclear fuel rod 200 can comprise a metal or metal alloy 214 surrounding the cavity 212. The metal or metal alloy 214 can be disposed between the inner surface 210 and the outer surface 208. Fuel rods 200 of the present disclosure can comprise metal or metal alloys including zirconium or zirconium alloys. For example, an alloy comprising zirconium and tin and/or niobium and optionally any of iron, tin, vanadium, and copper (e.g., ZIRLO^{®}, Optimized ZIRLO^{™}, LT-ZIRLO^{™} and AXIOM^{™} alloys available from Westinghouse Electric Company of Cranberry Twp, Pennsylvania, United States) can be comprised by the fuel rods 200.

The nuclear fuel rod 200 can comprise an outer diameter (see line 206) extending from a point of the outer surface 208, through a center of the cavity 212, and to an opposite point on the outer surface 208. The nuclear fuel rod 200 can comprise an inner diameter (see line 204) extending from a point of the inner surface 110, through a center of the cavity 112, and to an opposite point on the inner surface 110. The example fuel rod 200 shown in FIG. 2 would not necessarily comprise any specific physical features at lines 204, 206. These lines merely indicate the geometry of the inner and outer diameters.

Alternatively, or in addition to, the optimizations of the nuclear fuel pellet geometry described above, additional modifications may be made to the nuclear fuel rods themselves. Again, such modifications can increase the H/U ratio and/or lead to more complete fuel burn up.

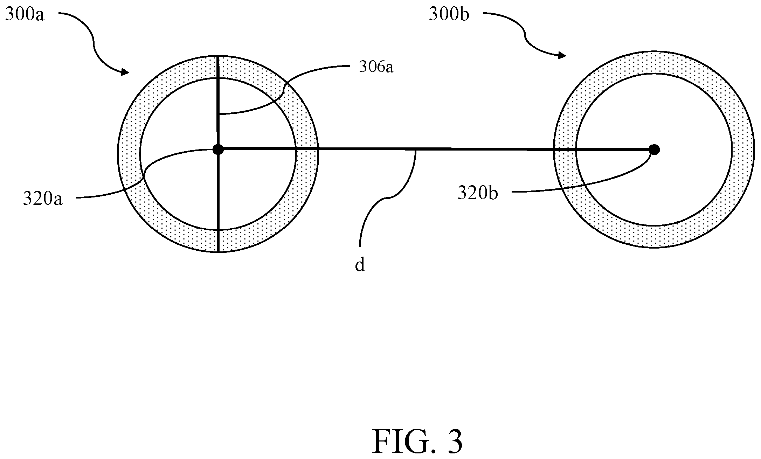

Referring to FIGS. 2 and 3, and alternatively, or in addition to, the optimizations of the nuclear fuel pellet geometry described above, additional modifications may be made to the nuclear fuel rods themselves. Fuel rods and/or claddings may be designed such that a ratio of the outer diameter 206, 306a to the pitch may be in a range of, for example 0.720 to 0.745. For example, the ratio of the outer diameter 306a to the pitch may be in a range of 0.725 to 0.745 or 0.730 to 0.740. For example, the ratio of the outer diameter 306a to the pitch may be 0.738. As used herein, "pitch," refers to the distance d from one center 320a of a fuel rod 300a to the center 320b of adjacent fuel rod 300b, within a fuel assembly.

Nuclear fuel rods 200 of the present disclosure when used in a 17×17 fuel lattice, with a fuel rod pitch of 0.496 inches (~12.6 mm), can optionally comprise an outer diameter 206 in a range of 9.2 mm to 9.5 mm such as, for example, an outer diameter 206 of 9.2 mm, 9.3 mm, 9.4 mm, or 9.5 mm. Nuclear fuel rods 200 of the present disclosure can optionally comprise an outer diameter 206 of 9.2 mm to 9.4 mm such as, for example, an outer diameter 206 of 9.2 mm, 9.3 mm, or 9.4 mm.

A combination of fuel pellets of the present disclosure, along with fuel rods of the present disclosure can be beneficial. For example, when considering a 17×17 fuel assembly, annular fuel pellets with a void volume in a range of 4 - 10% can correspond to an annular pellet inner diameter in a range of 0.07 inch to 0.10 inch (1.8 mm to 2.5 mm), and can be employed within a fuel rod comprising an outer diameter of in a range of 9.0 mm to 9.5 mm, such as, for example, 9.0 mm, 9.1 mm, 9.2 mm, 9.3 mm, 9.4 mm, or 9.5 mm. Such a configuration can improve the H/U ratio when a plurality of these fuel rods are employed in PWR.

Nuclear fuel rods 200 of the present disclosure can comprise a thickness which is the difference in length between the inner diameter 204 and the outer diameter 206. The thickness may be up to 6%, up to 7%, or up to 8% of the outer diameter 206, 306a. The thickness may be in a range of 6% to 8% of the outer diameter 206, 306a. The thickness may be in a range of 6.5% to 8% of the outer diameter 206, 306a. The thickness may be from 7% to 8% of the outer diameter 206, 306a. The thickness may be greater than 8% of the outer diameter of 206, 306a. The thickness can be of at least 0.0225 inches which is the value used in the current art 17×17 fuel assembly. The optimal thickness for 17×17 fuel assembly appears to be at least 0.030 inches and is driven by the competing effects of reduced uranium loading, increased parasitic material, changes in fuel rod and fuel assembly axial growth and mechanical stiffness as well as other effects.

Cladding with these thicknesses have been found to improve performance of nuclear fuel assemblies of the present disclosure. For example, increasing the fuel rod cladding thickness adds needed metal mass to accommodate exposure requirements of high-burnup, 24-month cycles, all of which can be at or above core average power. The combination of increased cladding thickness and advanced cladding alloys reduces the hydrogen concentration, fretting, hoop stress and creep in the cladding, all of which provide margin cladding failure under normal conditions to design basis. Additionally, increasing cladding thickness as disclosed herein can result in a reduction of fuel volume which, when implemented with fuel of the present disclosure, results in an increased H/U ratio which can improve uranium utilization and ultimately reduce costs. Fuel rods with claddings comprising a thickness as described herein can be combined with fuel pellets of the present disclosure and can also comprise outer diameters as described herein.

Nuclear fuel assemblies of the present disclosure can comprise improved grid spacers. For example, high burnup optimized spacers comprising advanced alloys such as those disclosed above can be utilized to minimize corrosion and growth. Alternatively or additionally, grid/rod contact area can be maximized to increased fretting margin. Alternatively or additionally, grid height can be increased to maximize grid crush strength.

Nuclear fuel assemblies of the present disclosure can comprise improved skeleton thimbles. For example, the skeleton thimbles can comprise a thickness in a range of 0.015 inches (approximately 0.38 mm) to 0.025 inches (approximately 0.635 mm) such as, for example, 0.020 inches (approximately 0.51 mm). The skeleton thimbles can comprise zirconium alloys as described herein.

Various parameters of nuclear fuel assemblies of the present disclosure have been described. It should be appreciated that all of these parameters can be adjusted as described, alone or in any combination, in order to provide a fuel assembly suitable to receive and utilize high burnup fuel on a 24-month periodic cycle, as described.

Also provided herein is a method for refueling a pressurized water nuclear reactor comprising a nuclear fuel assembly of the present disclosure. The method can comprise refueling the pressurized water nuclear reactor on a 24-month cycle. Refueling on 24-month periodic cycle intervals can reduce the number of outages, time, and materials needed to refuel the reactor, compared to 12- or 18-month cycle. For example, a PWR comprising a nuclear fuel assembly of the present disclosure may operate for 23 months and be refueled (and not producing power) for 1 month. Thus, a 24-month periodic cycle can be performed. Additionally, the method can comprise achieving a fuel burnup of greater than 60 GWd/tU during the 24-month cycle such as, for example, achieving a fuel burnup of greater than 70 GWd/tU. Achieving such fuel burnups can reduce the cost of electricity generation by reducing the uranium needed for a given amount of power generation.

Various aspects of the subject matter described herein are set out in the following examples.

Example 1 - A nuclear fuel assembly for a pressurized water reactor, the nuclear fuel assembly comprising: a plurality of nuclear fuel rods configured to contain a nuclear fuel, wherein the nuclear fuel assembly is configured such that a hydrogen to uranium ratio for the fuel assembly, when coolant and the nuclear fuel are present under operating conditions, is at least 4.0.

Example 2 - The nuclear fuel assembly of Example 1, further comprising the nuclear fuel, wherein the nuclear fuel comprises a fissile material and the fissile material comprises up to 20% by weight ²³⁵U, based on the total weight of the uranium in the fissile material.

Example 3 - The nuclear fuel assembly of any of Examples 1-2, further comprising the nuclear fuel, wherein the nuclear fuel comprises a fissile material and the fissile material comprises at least 5% by weight ²³⁵U and no greater than 20% by weight ²³⁵U, based on the total weight of the uranium in the fissile material.

Example 4 - The nuclear fuel assembly of any of Examples 1-3, further comprising nuclear fuel pellets comprising the fissile material, wherein the nuclear fuel pellets are located within the nuclear fuel rods, and wherein at least a portion of the nuclear fuel pellets are annular nuclear fuel pellets.

Example 5 - The nuclear fuel assembly of any of Examples 1-4, further comprising nuclear fuel pellets comprising the fissile material, wherein the nuclear fuel pellets are located within the nuclear fuel rods and all of the nuclear fuel pellets are annular nuclear fuel pellets.

Example 6 - The nuclear fuel assembly of any of Examples 1-5, wherein the nuclear fuel rods comprise an outer diameter to pitch ratio in a range of 0.720 to 0.745.

Example 7 - The nuclear fuel assembly of any of Examples 4-6, wherein the annular fuel pellets have a void volume in a range of 4% to 15% of the total volume of the annular fuel pellets.

Example 8 - The nuclear fuel assembly of any of Examples 1-7, wherein the hydrogen to uranium ratio for the fuel assembly, when operating with coolant and fissile material, is at least 4.3.

Example 9 - A method for refueling a pressurized water nuclear reactor comprising a nuclear fuel assembly of any of Examples 1-8, the method comprising: refueling the pressurized water nuclear reactor on 24-month periodic cycle intervals.

Example 10 - The method of Example 9, further comprising achieving a fuel burnup of greater than 60 GWd/Tt.

Example 11 - The method of any of Examples 9-10, further comprising achieving a fuel burnup of greater than 70 GWd/tU.

Unless specifically stated otherwise as apparent from the foregoing disclosure, it is appreciated that, throughout the foregoing disclosure, discussions using terms such as "processing," "computing," "calculating," "determining," "displaying," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

One or more components may be referred to herein as "configured to," "configurable to," "operable/operative to," "adapted/adaptable," "able to," "conformable/conformed to," etc. Those skilled in the art will recognize that "configured to" can generally encompass active-state components and/or inactive-state components and/or standby-state components, unless context requires otherwise.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flow diagrams are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures or characteristics may be combined in any suitable manner in one or more aspects.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system that "comprises," "has," "includes" or "contains" one or more elements possesses those one or more elements, but is not limited to possessing only those one or more elements. Likewise, an element of a system, device, or apparatus that "comprises," "has," "includes" or "contains" one or more features possesses those one or more features, but is not limited to possessing only those one or more features.

The terms "about" or "approximately" as used in the present disclosure, unless otherwise specified, means an acceptable error for a particular value as determined by one of ordinary skill in the art, which depends in part on how the value is measured or determined. In certain embodiments, the term "about" or "approximately" means within 1, 2, 3, or 4 standard deviations. In certain embodiments, the term "about" or "approximately" means within 50%, 20%, 15%, 10%, 9%, 8%, 7%, 6%, 5%, 4%, 3%, 2%, 1%, 0.5%, or 0.05% of a given value or range.

Any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. The appended claims define the overall scope.

## Claims

1. A nuclear fuel assembly for a pressurized water reactor, the nuclear fuel assembly comprising:
a plurality of nuclear fuel rods (200; 300a, 300b) configured to contain a nuclear fuel,
wherein the nuclear fuel assembly is configured such that a hydrogen to uranium ratio for the fuel assembly, when coolant and the nuclear fuel are present under operating conditions, is at least 4.0.

2. The nuclear fuel assembly of claim 1, further comprising the nuclear fuel, wherein the nuclear fuel comprises a fissile material (114) and the fissile material comprises up to 20% by weight ²³⁵U, based on the total weight of the uranium in the fissile material.

3. The nuclear fuel assembly of claim 1, further comprising the nuclear fuel, wherein the nuclear fuel comprises a fissile material (114) and the fissile material comprises at least 5% by weight ²³⁵U and no greater than 20% by weight ²³⁵U, based on the total weight of the uranium in the fissile material.

4. The nuclear fuel assembly of any one of claims 1 to 3, further comprising nuclear fuel pellets (100) comprising the fissile material (114), wherein the nuclear fuel pellets (100) are located within the nuclear fuel rods (200; 300a, 300b) and wherein at least a portion of the nuclear fuel pellets (100) are annular nuclear fuel pellets.

5. The nuclear fuel assembly of any one of claims 1 to 4, further comprising nuclear fuel pellets (100) comprising the fissile material (114), wherein the nuclear fuel pellets (100) are located within the nuclear fuel rods (200; 300a, 300b) and wherein all of the nuclear fuel pellets (100) are annular nuclear fuel pellets.

6. The nuclear fuel assembly of any one of claims 1 to 5, wherein the nuclear fuel rods (200; 300a, 300b) comprise an outer diameter (206; 306a) to pitch (d) ratio in a range of 0.720 to 0.745.

7. The nuclear fuel assembly of any one of claims 4 to 6, wherein the annular fuel pellets (100) have a void volume (112; 212) in a range of 4% to 15% of the total volume of the annular fuel pellets.

8. The nuclear fuel assembly of any one of claims 1 to 7, wherein the hydrogen to uranium ratio for the fuel assembly, when operating with coolant and fissile material (114), is at least 4.3.

9. A method for refueling a pressurized water nuclear reactor comprising a nuclear fuel assembly of any one of claims 1 to 8, the method comprising:
refueling the pressurized water nuclear reactor on 24-month periodic cycle intervals.

10. The method of claim 9, further comprising achieving a fuel burnup of greater than 60 GWd/Tt.

11. The method of either claim 9 or claim 10, further comprising achieving a fuel burnup of greater than 70 GWd/tU.
